(19) Europäisches Patentamt
European Patent Office
Office européen des brevets

(11) Publication number: 0 339 175 A1

(12) # EUROPEAN PATENT APPLICATION

(21) Application number: 88870181.0

(51) Int. Cl.⁴: A23L 1/212 , A23B 7/08

(22) Date of filing: 07.12.88

(30) Priority: 01.04.88 BE 8800386

(43) Date of publication of application: 02.11.89 Bulletin 89/44

(84) Designated Contracting States: AT BE CH DE ES FR GB GR IT LI LU NL SE

(71) Applicant: ECLAT PARTICIPATIONS S.A.
3, avenue Pasteur
L-2311 Luxembourg(LU)

(72) Inventor: Tobback, Paul P.
Karrestraat 2
B-3020 Herent(BE)
Inventor: Feys, Marcel C.
Torekenslaan 29
B-1970 Wezembeek-Oppem(BE)

(74) Representative: Delleré, Robert et al
Bureau Vander Haeghen 63, avenue de la Toison d'Or
B-1060 Bruxelles(BE)

(54) **Process for the production of fruit- or vegetable chips.**

(57) Process for producing fruit- or vegetable chips, in which fruit or vegetable slices are submitted to an osmotic drying using a sugar syrup until the minimum dry substance content of said slices is of 30 g/100 g and in which the dried slices are fried in oil under vacuum at a temperature of 80 to 130 °C during 0.5 to 4 minutes. The obtained end product has a final moisture content of maximum 4 g per 100 g and a fat content of 15 to 30 g per 100 g.

EP 0 339 175 A1

# PROCESS FOR THE PRODUCTION OF FRUIT- OR VEGETABLE CHIPS

The invention relates to a process for producing fruit- or vegetable chips, in which slices or pieces of fruit or vegetable are first dried and then cooked in oil.

The object of the invention is a process for preparing snacks or chips having the following properties :

- a pleasant crispy final structure;
- an attractive and typical undulated shape, in which the initial fruit or vegetable slice or piece remains clearly recognizable ;
- a colour which is very close to the original colour of the fruit or vegetable tissue.

Several production methods are known for drying slices or pieces of fruit which can be used as instant foods after reconstitution with water. Such products are however not adequate for direct consumption as a snack. They do not respond to the requirements for the production of fruit- or vegetable chips with the necessary pleasant structure needed for direct consumption.

Other processes relate to the production of dried fruit slices, in which the slices are first impregnated for a long period of time in a concentrated sugar solution and then dried by various drying methods.

These processes relate to the principle of the candying of fruit or fruit parts, in which large amounts of sugar are absorbed by the product.

The document DD 227039-A-1 of the Institut für Gebtreideverarbeitung describes a process in which products such as vegetables or fruit are treated during 20-24 hours in a concentrated solution of invert sugar and are thereafter dried during several hours in hot air.

The U.S. 3,365,309 patent describes a process for drying inter alia slices of apple, peach, pear e.a (thickness 8 - 12 mm), as well as cherries and grapes, during which a minimum absorption of 40 % sugar on a dry weight basis of the fruit is necessary for obtaining an acceptable final product. This process involves the immersion of the products in a concentrated sugar solution for several hours. Thereafter, said products are further dried by means of hot air, possibly under vacuum, also for a very long period of time. The obtained products must be hydrated again before their use, as already indicated hereabove. In such processes, the product is noticeably enriched with sugars. Moreover the very long treatments are not desired in an industrial process and they can surely not be applied in a continuous manufacturing process.

The production of fruit- and vegetable snacks by short immersion (generally during 5 - 10 minutes up to a maximum of 20 minutes) of fruit and vegetable slices (1.5 to ± 5 mm) in a sugar solution, possibly at a high temperature, combined with various drying methods is also known. Due to the short immersion time, a surface effect is mainly obtained. By inhibiting the oxidation reactions, mainly in combination with the addition of anti-oxidants,the colour of the products is better maintained. Moreover the coating of the product with a film of crystallizable sugars, possibly in combination with the addition of aromatic substances, has a favourable effect on the final texture and taste of the end product.

The drying processes which are used in combination with the short immersion in a sugar solution are often a combination of various drying methods.

The U.S. 4,341, 803 patent describes a process in which, after the pretreatment, freeze-drying, drying with microwaves and vacuum drying with hot air are successively applied.

The Japanese patent application 84169/1985 describes a process in which, after the usual pretreatments, the slices are cooked (90° C) during 10 minutes in a sugar solution (35-45° Brix). Thereafter, said slices are quickly frozen and dried successively by means of hot air and cooking in oil at 160° C. Finally they are hardened under vacuum.

In another process (see U.S. patent 3,962,355), apple slices are shortly treated in a sugar solution and then dried at 65 - 90° C in a hot air drier, cooked in oil at 155-165° C during 3-4 minutes and finally hardened under vacuum.

Instead of being dried with hot air, other products are also fried sometimes for a longer period oftime (10-15 minutes).

The U.S. patent 3,718,485 describes a process in which apple slices having a thickness of ± 1 cm, are fried, after treatment in a 50 % sugar solution at ± 80° C, under vacuum at ±90° C during 1 hour until a dry substance content of 3- 8 % is obtained. The oil/product ratio in the cooking step is of ± 100/1. It is obvious that such a vacuum frying process during 1 hour is economically not valid on an industrial scale.

In other processes (see Japanese patent application 58092/1985 ; German patent application 2,712,560) the above described pretreatment is combined with a freeze-drying process. Freeze-dried products have a typical porous structure which does not meet the requirements of an agreeable crusty snack and are moreover very sensitive to the absorption of moisture Moreover the cost of such a freeze drying process is very high.

In the U.S. patent 4,514, 428, a short pretreatment in a solution of sugar is combined with two successive drying steps with hot air. Drying with hot air has, in most cases, a detrimental effect on the colour and the texture of the product.

It may generally be pointed out that, in these different processes, in which a short immersion in sugar is applied, the treatment of the slices in an industrial process is very delicate, surely when thin slices are used for direct consumption as a snack. Many slices are broken and the aspect of the product is not attractive.

In an alternative process to the one described hereabove (U.S. patent 4,514,428) the slices are processed in a single layer during the entire treatment.

In most of the production methods described until now, the pretreatment is also very complex. For example, apples are peeled, cored and after slicing, the stones are removed by washing and finally the slices are possibly submitted to a further pretreatment for the purpose of inhibiting the browning processes.

The above described processes are thus not optimal neither from an economical point of view, nor with respect to the texture and the general aspect of the end product.

This invention relates to a process for the production of fruit or vegetable chips, in which fruit-or vegetable slices or pieces are partially predried under mild conditions at a low temperature, whereafter the predried products are submitted to a final drying by frying under vacuum for a very short period of time, also at a relatively low temperature. The combination of an osmotic predrying at a low temperature with a short-time cooking at a low temperature produces chips or snacks having the aboveindicated desired properties, namely a crisp or crusty texture.

According to the invention, fruit- and vegetable slices are submitted to an osmotic drying process using a sugar syrup until a minimum dry substance content of about 30 g per 100 g is obtained, said content being preferentially of 40 to 60 g per 100 g, whereafter the dried slices or small pieces are submitted to a frying under vacuum in an oil at a temperature of about 80 to 130 °C during 0,5 to 4 minutes, so that an end product having a rest moisture content of maximum 4 g per 100 g of final product, preferentially of about 2 g per 100 g of final product, is obtained.

Due to the conception and execution of the process according to the invention, the initial colour of the product is very well maintained. It has an agreeable crispy texture and has a very attractive aspect. As a result of the specific pretreatment, the product can very well be treated on an industrial scale, with a limited breakage of the slices. Moreover, due to the used combination of treatments, an attractive undulating or arbitrarily folded shape is given to the product.

Osmosis is a process in which water molecules move through a semi-permeable membrane from a medium having a low concentration of dissolved solids (hypotonic medium) to a medium of a high concentration (hypertonic medium), without simultaneous transport of the dissolved solids in the opposite direction.

Osmosis occurs also, when, for example, apple slices are immersed in a (concentrated) sugar syrup. The undamaged cell walls of the apple tissue act as semi-permeable membrane, so that water is removed from the slices, without absorption by these slices of noticeable amounts of low molecular weight sugars from the concentrated solution (syrup).

Tests have shown that in a temperature range (syrup temperature) between 45 °C and 70 °C, the diffusion coefficient for water removal from the slices varies between about $3\ 10^{-6}$ $cm^2$/sec and $14.5\ 10^{-6}$ $cm^2$/sec, whereas the average diffusion coefficient for the lower sugars (glucose, fructose) which diffuse into the slices varies between $0.15\ 10^{-6}$ $cm^2$/sec and $0.25\ 10^{-6}$ $cm^2$/sec, i.e., 10 to 100 times less than the diffusion coefficient of water.

This shows that, under the conditions of the process according to the invention, water is preferentially removed from the slices, while simultaneously only small amounts of sugar pass into the slices.

It can be seen that, contrary to other described processes, in which sugars are exchanged by osmosis, the membranes of the apple tissue retain their semi-permeable character and thereby prevent the absorption of noticeable amounts of sugar by the slices during the osmotic treatment.

According to a particular feature of the invention thin slices or pieces are dried using a sugar syrup having a DE-value (dextrose equivalent value) situated between about 30 and 60, at a temperature of about 30 to 60 °C during about 60 to 180 minutes, preferentially during about 90 to 150 minutes.

Preferentially, the DE-value of the sugar syrup, which is made from sugar-beets, sugar-cane or sugar containing grains, like corn and wheat, is comprised between 35 and 50, whereas the temperature of the sugar syrup varies from 45 to 55 °C.

When a sugar syrup having a DE-value of less than 30 is used, an efficient removal of water from the fruit- or vegetable slices is practically impossible at temperatures ranging from 30 to 60 °C, particularly from 45 to 55 °C. When, on the contrary, a sugar syrup having a DE-value of more than 60 is used, the obtained products have a surface content of low sugars which is too high and affecting taste properties of the chips and causing a pronounced crystallization during the cooking.

The products which are dried by osmosis acquire the necessary mechanical properties (firmness, hardness) without substantial surface crimping, and as a result allow an efficient further treatment (vacuum frying) of these products.

The process according to the invention is preferably applied for the treatment of commonly available apple and pear varieties (namely Red delicious, Golden delicious, Granny Smith, Boskoop, Jonagold, Conférence and Doyenné de Comice).

The process according to the invention may also be applied to other types of fruit, such as bananas, kiwi's, apricots, mango and similar products, as well as to vegetables, such as mushrooms, carrots etc., whatever the size of the individual fruit or vegetable.

The process comprises the following steps :

1. The raw materials are first washed possibly with the addition of a known detergent solution, depending on the treatment to which the fruits or vegetables have been previously submitted, such as waxing or treatment with anti-microbial agents.

2. The integral fruits or vegetables are sliced or cut into pieces having a thickness of, for example, between 1.2 to 6 mm, preferentially between 1.4 to 1.8 mm, namely for apples, pears, mushrooms, bananas, kiwi's, carrots, etc.

Coring, peeling or any other pretreatment of the fruit or vegetable is not necessary, for example for apples, pears, kiwi's and carrots. On the contrary, the presence of the the core and/or the skin helps maintaining the attractive aspect of the end product.

Removal of the core or peeling is of course necessary for some other fruit- or vegetable varieties, such as, for example, bananas and stone-fruit.

3. During the slicing it is necessary to continuously supply a sugar syrup for :

- protecting the vegetable or fruit slices against mechanical damage ;
- protecting the fruit or vegetable tissue against browning or discoloration, by avoiding direct contact with atmospheric oxygen ;
- coating the individual fruit or vegetable slices with sugar syrup, so that diffusion already starts and sticking between the slices is prevented, enabling a better treatment of the sliced products.

The slicing may also be carried out in the absence of oxygen, for example in an atmosphere of an inert gas.

4. The fruit- or vegetable slices are then osmotically dried by immersion into a sugar syrup produced from sugar-beets, sugar-cane or sugar-containing grains such as corn or wheat.

The DE-value (Dextrose Equivalent value) of the syrup is comprised between 30 and 60. It is preferred to work with syrup having a DE-value between 35 and 50. The selected DE-value is determining the desired osmotic effect and also, together with other process parameters, the duration of the osmotic drying and the final texture of the end product.

Antioxydants such as sulfites or organic acids, such as, for example, citric acid and ascorbic acid, may be added to the sugar syrup.

In order to obtain a suitable taste, organic acids, such as, for example malic acid, citric acid, tartaric acid, may also be added to the sugar syrup in an amount of 5 to 10 g per liter of syrup.

The osmotic drying is carried out at temperatures of the syrup which may vary between 30 and 60° C, the choise of a given temperature being determined by, and being determinant for, the duration of the immersion of fruit slices in the osmotic bath. Preferentially, a syrup temperature of 45 - 55° C is maintained. The selection of this temperature affects also the shape of the end product.

The duration of the immersion process in the sugar syrup varies between 60 and 180 minutes, preferentially between 90 and 150 minutes, in order to obtain slices having a dry substance content of at least 30 g /100 g, preferentially of 40 to 60 g/100 g.

The duration of immersion in the sugar is defined by the syrup temperature, the composition of the syrup, particularly the DE-value and the dry substance content of the syrup, whereby said content may vary between about 40 and 80 % by weight, preferentially between 50 and 55 % by weight.

The duration of immersion of the fruit or vegetable slices or pieces in the sugar syrup bath is also defined by the desired rest-moisture content of the end product ; the maximum rest moisture content being of about 4 g per 100 g of end product, preferentially of about 2 g per 100 g of end product.

The osmotic drying as herein described allows a continuous recycling of the sugar syrup (after filtration followed by a concentration). In this manner the necessary regular supply of fresh syrup to the syrup bath is limited to a minimum, whereby the production cost of the end product is also strongly affected.

5. At the end of the osmotic step, the slices are removed by a suitable conveying system from the sugar syrup, the excess syrup being removed by successive draining and rinsing with warm water or a diluted solution of sugar of the same type as used for the osmotic drying(temperature : 30-50° C). This washing is desirable for avoiding that the frying oil becomes too filthy and for securing the desired quality of the end product.

6. The osmotically dried slices or pieces are then submitted to a vacuum frying process in a vegetable oil at temperatures comprised between 80 and 130° C but preferentially between 115° C and 125° C. At these temperatures, the cooking time is reduced to 0.5 to 4 minutes. Shorter cooking times at higher temperatures or longer cooking times at lower temperatures cause the formation of end products of lower quality from a sensorial point of view.

The vacuum frying may be carried out with all the industrially produced oils which are suitable for use in the food technology and which are stable under the above described conditions . According to the type of oil, the taste properties of the end product may be influenced.

This frying process may be carried out, for example, in soya oil, corn oil, peanut oil or partially hydrogenated oils.

It is essential that, during the treatment, the product be brought to a low pressure, before put in contact with the hot oil. It is also essential that the product is removed from the hot oil before being submitted to the atmospheric pressure.

Usually, a vacuum of 90 to 100 kPa is applied, i.e. a pressure below than 10,000 Pa.

Deviations from the described processing conditions cause a loss of quality, namely an increased fat content and a glassy appearance. Further treatments after frying as commonly used in the technology of food chips may also be carried out.

The product obtained by the above described process has :

1. a rest moisture content of maximum 4 g water, preferentially about 2 g water/100 g end product ;

2. an attractive and typically undulated shape, in which the original slice can be clearly recognized, the average bulk density of the product being, for example for apples and pears, of about 60 kg/m$^3$, whereby the product can be suitably marketed as a snack product.

3. a colour which is very similar to the original colour of the fruit or vegetable tissue ;

4. a pleasant crispy texture ;

5. a fat content which, depending on the parameters used, is comprised between 15 and 30 g/100 g of end product ;

6. a taste which is influenced by :

- the fruit or vegetable variety ;
- the type of acids which may be added to the sugar syrup during the osmotic drying step.

The end product may be flavoured by spraying or dusting with known flavours or flavour mixes.

Depending upon the packaging conditions (packaging under various inert gases) the product can be kept during at least 2 to 3 months, without loosing of any of its specific properties.

The process according to the invention is described into more detail in the following non-limiting examples :

EXAMPLE 1

100 kg apples (variety : Golden delicious, size : 75-80) are washed with 1 % of FMC - Fruit Cleaner 220 and then rinsed with water.

Without peeling or removal of the core, the integral fruit are then sliced , using an Urschell CC slicer, the slices having a thickness of 1.5 mm, under continuous supply of the same sugar syrup as used in the osmotic drying process.

The Urschell CC slicer was located above the osmotic bath, so that the slices fell immediately, without any further treatment, into the sugar syrup. The osmotic bath contained a glucose syrup having a dry substance content of 60 % and a DE-value of 40, and to which 10 g/litre of malic acid were added. The temperature of the bath was of 50° C. The slices were dried in said bath during 150 minutes, so that slices having a dry substance content of about 60 g/100 g of product were obtained.

After the removal of the slices from the bath, said slices were washed with a diluted solution of sugar of the same type as used for the osmotic drying, the dry substance of which being of 30 %, in order to remove the adhering syrup. The slices were then fried under a pressure of less than 10,000 Pa and at a temperature of 125° C in a frying oil consisting of a hydrogenated soya oil having a melting point of 29° C. The frying time was 140 seconds.

After this frying step, the slices were removed under vacuum from the oil. The vacuum was then broken and the slices were dusted with 2 g per 100 g slices of a commercially available mixture of encapsulated apple aroma and fruit acids.

The final product had a moisture content of 2.0 g per 100 g and a fat content of 27 g per 100 g of product.

The end product was packed under nitrogen in a metallized laminated sheet. The obtained chips had a bulk density of about 60 g/l and were very crispy and tasteful.

EXAMPLE 2

Pears, variety Conference have been converted into chips by using the method described in Example 1.

EXAMPLE 3

100 kg of mushrooms (Paris mushrooms) have been washed with water containing 1 % of citric acid.

The washed mushrooms have then been cut into slices having a thickness of 1.7 mm using an Urschell CC slicer. During the slicing, sugar syrup of the same type as used later on for the osmotic drying was fed into the slicer, which was located above the osmotic bath, so that the slices fell immediately into said bath.

For the osmotic drying of the slices, a glucose syrup having a dry substance content of 60 % and a DE-value of 40 was used. The slices were predried in the said bath at a temperature of 50° C during about 100 minutes. After this treatment, the slices had a dry substance content of about 55 g per 100 g of end product.

In order to remove the adhering syrup, the slices were then shortly rinsed with water at room temperature.

Said slices were then fried under vacuum (pressure of less than 10,000 Pa) and at a temperature of 115° C. A hydrogenated soya oil having a melting point of 29° C was used as frying oil. The slices were fried during 150 seconds.

After removal of the slices from the oil, the vacuum was broken and the slices were dusted with 2 g/100 g slices of an encapsulated mushroom aroma.

The so obtained chips had a rest moisture content of 2 % and a fat content of 25 %.

The product was finally packed under a nitrogen atmosphere in a metallized laminated sheet. The bulk density of the obtained chips was about 200 g/litre.

Chips have also been produced by the Applicant with bananas, which were previously peeled, and with kiwis.

**Claims**

1. Process for producing fruit- or vegetable chips, in which slices or pieces of fruit or vegetable are first dried and then fried in oil, characterized in that said slices or pieces are osmotically dried by means of a sugar syrup until a minimum dry substance content of about 30 g per 100 g is obtained and the dried slices or pieces are submitted to a frying under vacuum in an oil at a temperature of about 80 to 130° C during 0.5 to 4 minutes, so that an end product having a rest moisture content of maximum 4 g per 100 g of end product is obtained.

2. Process according to claim 1, characterized in that the dried slices or pieces are fried until chips having a final moisture content of about 2 g per 100 g of end product are obtained.

3. Process according to claim 1, characterized in that said slices or pieces are osmotically predried to a dry substance content of about 40 to 60 g/100 g.

4. Process according to at least one of the preceding claims, characterized in that said slices or pieces are dried by means of a sugar syrup having a DE-value (dextrose equivalent value) comprised between about 30 and 60, at a temperature of about 30 to 60° C during about 60 to 180 minutes, preferentially during about 90 to 150 minutes.

5. Process according to claim 4, characterized in that the DE-value of the sugar syrup is comprised between about 35 and 50.

6. Process according to claim 4 or 5, characterized in that the temperature of the sugar syrup is comprised between about 45 and 55 ° C.

7. Process according to at least one of the preceding claims, characterized in that a sugar syrup having a dry substance content of about 40 to 80 % by weight is used.

8. Process according to claim 7, characterized in that the dry substance content of the sugar syrup is maintained at about 50 to 65 % by weight during the osmotic drying of said slices or pieces.

9. Process according to claim 1, characterized in that the osmotically dried slices or pieces are submitted to a frying under vacuum at a temperature of about 115 to 125° C during 0.5 to 2 minutes.

10. Process according to any one of the preceding claims, characterized in that the vacuum frying is carried out at such a temperature of the oil and during such a period of time that the obtained chips have a fat content of about 15 to 30 g per 100 g.

11. Process according to at least one of the claims 8 to 10, characterized in that the osmotic drying and the frying of apple or pear slices are carried out so that the obtained chips have a bulk density of about 60 g/litre.

12. Process according to at least one of the preceding claims, characterized in that the excess of sugar syrup is removed from the osmotically dried slices or pieces by draining and/or rinsing with water or with a diluted solution of sugar, before the osmotically dried slices or pieces are fried.

13. Process according to at least one of the preceding claims, characterized in that apples, pears, mushrooms, kiwis, bananas, carrots and the like are used as starting products.

14. Process according to at least one of the preceding claims, characterized in that the sugar syrup is derived from sugar-beets, sugar-cane or sugar-containing grains.

15. Process according to at least one of the preceding claims, characterized in that the entire fruits or vegetables are cut into slices or pieces in the absence of oxygen.

16. Process according to claim 15, characterized in that the fruits or vegetables are cut into slices or pieces under continuous addition of sugar syrup.

European Patent Office

# EUROPEAN SEARCH REPORT

Application Number

EP 88 87 0181

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y,D | US-A-3 962 355 (TATSUO YAMAZAKI et al.)<br>* Claims 1-4; examples 1,2 * | 1-5,7, 10-14 | A 23 L 1/212<br>A 23 B 7/08 |
| Y | GB-A-2 188 528 (K.K. MONINOKI)<br>* Claims 1-3,5,7,8; examples * | 1-5,7, 10-14 | |
| A | EP-A-0 212 583 (TOSHIMITSU KAWAMURA)<br>* Claims 1-10; examples 1-4 * | 1-8 | |
| D,A | US-A-3 718 485 (M.P. LANKFORD)<br>* Example 1 * | 1,4 | |
| A | FOOD ENGINEERING, vol. 44, no. 11, November 1972, pages 50-51; J.A. KITSON et al.: "New fruit flavor snack"<br>* Page 50 * | 1-3 | |
| A | GB-A-2 146 255 (FUJIKAMA)<br>* Claims 1-4; examples * | 1-8,13, 14 | |

TECHNICAL FIELDS SEARCHED (Int. Cl.4)

A 23 L
A 23 B

The present search report has been drawn up for all claims

| Place of search | Date of completion of the search | Examiner |
|---|---|---|
| THE HAGUE | 06-07-1989 | DESMEDT G.R.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document